(19) Europäisches Patentamt

European Patent Office

Office européen des brevets

(11) **EP 0 983 805 A2**

(12) **EUROPÄISCHE PATENTANMELDUNG**

(43) Veröffentlichungstag:
**08.03.2000 Patentblatt 2000/10**

(51) Int. Cl.[7]: **B08B 1/04**, C02F 1/32

(21) Anmeldenummer: **99116436.9**

(22) Anmeldetag: **21.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.08.1998 DE 19839394**

(71) Anmelder:
**Grosse-Plankermann, Andreas
96050 Bamberg (DE)**

(72) Erfinder:
**Grosse-Plankermann, Andreas
96050 Bamberg (DE)**

(54) **Vorrichtung zur mechanischen Reinigung von Strahlerschutzrohren**

(57)    Aufgabe der Erfindung ist es, eine Vorrichtung zur Reinigung von Strahlerschutzrohren in UV-Anlagen zur Wasseraufbereitung zur Verfügung zu stellen, die rein mechanisch und annähernd ohne Beeinflussung des Einstahlbereichs des UV-Strahlers die Oberfläche des Strahlerschutzrohres effektiv reinigt.

Diese Aufgabe wird erfindungsgemäß gelöst durch, eine Vorrichtung zur mechanischen Reinigung von Strahlerschutzrohren, umfassend einen längs des Strahlerschutzrohres (4) geführten und entlang desselben bewegbaren Läufer, mindestens ein mechanisches Reinigungselement (11), das an dem Läufer angebracht ist und sich mit seiner Reinigungsfläche im Reibungskontakt befindet; und vorzugsweise einen Linearantrieb zum Hin- und Herbewegen des Läufers längs des Strahlerschutzrohres (4).

Bei der Vorrichtung ist der Linearantrieb von einem Auftriebskörper (6), welcher als Läufer ausgebildet oder mit dem Läufer verbunden ist, und einer Einrichtung zum Ändern des Füllstands einer Flüssigkeit in einem das Strahlerschutzrohr (4) umgebenden Behälter (1), gebildet. Der Läufer umgibt das Strahlerschutzrohr (4) konzentrisch.

Das Reinigungselement (11), vorzugsweise eine Bürste oder mehrere Bürsten, besonders bevorzugt ein Bürstenring oder mehrere Bürstenringe, ist ebenfalls konzentrisch um das Strahlerschutzrohr (11) angeordnet und wird mittels eines Drehantriebs angetrieben.

Der Drehantrieb umfaßt ein konzentrisch um das Strahlerschutzrohr (4) angeordnetes Staurohr (5), an dem wenigstens ein Drehsprengerarm (8) mit mindestens einer, vorzugsweise tangentialen, Austrittsdüse (9) versehen ist.

Der als Auftriebskörper (6) ausgebildete Läufer, das Reinigungselement (11), das Staurohr (5) und ein Drehsprengerarm oder mehrere Drehsprengerarme (8) mit, vorzugsweise tangentialer, Austrittsdüse bzw., vorzugsweise tangentialen, Austrittsdüsen (9) sind zu einer baulichen Einheit fest miteinander verbunden.

Fig. 1

Printed by Xerox (UK) Business Services
2.16.7/3.6

**Beschreibung**

Die Erfindung betrifft eine Vorrichtung zur mechanischen Reinigung von Strahlerschutzrohren, insbesondere von Quarzglasrohren in UV-Anlagen für die Wasseraufbereitung.

Vorrichtungen zur Reinigung von zylindrischen Strahlerschutzrohren mit rotierenden Borsten bzw. Bürsten (DE 195 32 818) sind bekannt. Die Probleme einer solchen Vorrichtung liegen jedoch erstens in der für die Reinigung zwingend erforderlichen Rotationsbewegung der UV-Lampe, zweitens der notwendigen Energiezuführ für die Rotation des UV-Strahlers und der Bürste und drittens in der Beeinflussung der Einstrahlung durch die längsseits über die Einstrahllänge des UV-Strahlers im Bestrahlungsraum installierten Bürsten, wodurch in diesem Bereich keine bzw. kaum UV-Stahlung aufdie zu behandelnde Flüssigkeit trifft, da diese von den Einbauten vollständig absorbiert wird. Für eine effektive Reinigung ist es also erforderlich, daß möglichst keine negative Beeinflussung der Strahlungsintensität durch die Reinigungsvorrichtung hervorgerufen wird.

Aufgabe der Erfindung ist es, eine Vorrichtung zur Reinigung von Strahlerschutzrohren in UV-Anlagen zur Wasseraufbereitung zur Verfügung zu stellen, die rein mechanisch und annähernd ohne Beeinflussung des Einstahlbereichs des UV-Strahlers die Oberfläche des Strahlerschutzrohres effektiv reinigt.

Diese Aufgabe wird erfindungsgemäß gelöst durch, eine Vorrichtung zur mechanischen Reinigung von Strahlerschutzrohren, umfassend einen längs des Strahlerschutzrohres geführten und entlang desselben bewegbaren Läufer, mindestens ein mechanisches Reinigungselement, das an dem Läufer angebracht ist und sich mit seiner Reinigungsfläche im Reibungskontakt befindet; und vorzugsweise einen Linearantrieb zum Hin- und Herbewegen des Läufers längs des Strahlerschutzrohres.

Bei der Vorrichtung ist der Linearantrieb von einem Auftriebskörper, welcher als Läufer ausgebildet oder mit dem Läufer verbunden ist, und einer Einrichtung zum Ändern des Füllstands einer Flüssigkeit in einem das Strahlerschutzrohr umgebenden Behälter, gebildet. Der Läufer umgibt das Strahlerschutzrohr konzentrisch.

Das Reinigungselement, vorzugsweise eine Bürste oder mehrere Bürsten, besonders bevorzugt ein Bürstenring oder mehrere Bürstenringe, ist ebenfalls konzentrisch um das Strahlerschutzrohr angeordnet und wird mittels eines Drehantriebs angetrieben.

Der Drehantrieb umfaßt ein konzentrisch um das Strahlerschutzrohr angeordnetes Staurohr, an dem wenigstens ein Drehsprengerarm mit mindestens einer, vorzugsweise tangentialen, Austrittsdüse versehen ist. Der als Auftriebskörper ausgebildete Läufer, das Reinigungselement, das Staurohr und ein Drehsprengerarm oder mehrere Drehsprengerarme mit, vorzugsweise tangentialer, Austrittsdüse bzw., vorzugsweise tangentialen, Austrittsdüsen sind zu einer baulichen Einheit fest miteinander verbunden.

Die vorstehenden sowie weitere Ziele, Vorteile und Merkmale der Erfindung werden nachfolgend unter Bezugnahme aufdie Figuren der Zeichnung näher beschrieben und erläutert; es zeigen:

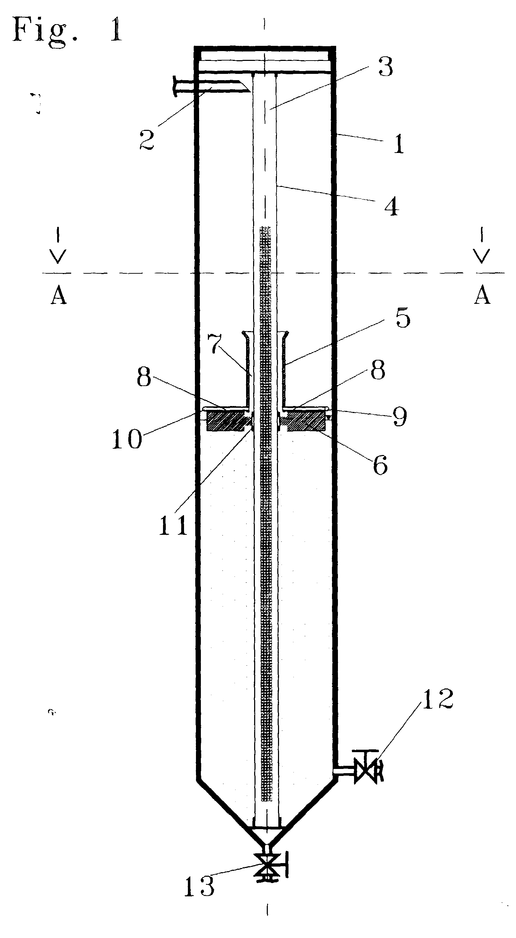

Fig. 1    eine im wesentlichen im Querschnitt dargestellte besonders bevorzugte Ausführungsform einer erfindungsgemäßen Reinigungsvorrichtung;

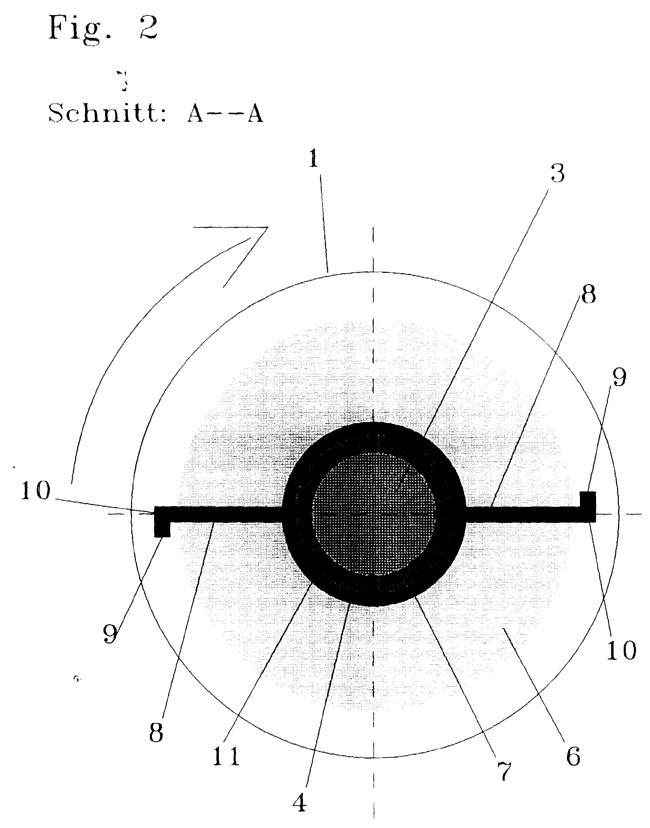

Fig. 2    eine Aufsicht von oben aufdie Reinigungsvorrichtung gemäß Fig. 1

Die zu behandelnde Flüssigkeit wird über eine im Bestrahlungabehälter 1 installierte Zuleitung 2 an das obere Ende des vertikal installierten UV-Strahlers 3 geführt, an dem die Flüssigkeit als dünner Film, dessen Sichtdicke in Abhängigkeit zum Volumenstrom steht, aufgrund der Schwer- und Adhäsionskraft an dem Strahlerschutzrohr 4 hinabfließt.

Unabhängig von dem Füllstand in dem Bestrahlungsbehälter 1 fließt die Flüssigkeit an dem Strahlerschutzrohr 4 entlang in das Staurohr 5, welches oberhalb des Auftriebskörpers 6 installiert ist. Ein Bruchteil der zufließenden Flüssigkeit strömt direkt durch die zu durchströmende Fläche des Reinigungselements 11, welches vorzugsweise unterhalb des Staurohrs 5 montiert ist. Ein weiterer Teil der Flüssigkeit tritt in vorzugsweise zwei, am unteren Ende des Staurohrs 5 horizontal installierten Drehsprengerarme 8 ein und strömt dann durch die Austrittsdüsen 9, welche an den Endwinkeln 10 der Drehsprengerarme 8 befinden, vorzugsweise tangential, aus.

Wenn nun der zufließende Volumenstrom größer ist als der mögliche abzuführende Volumenstrom, bedingt durch die geringe zu durchströmende Querschnittsfläche der Austrittsdüsen 9 und der zu durchströmende Fläche des Reinigungselements 11, kommt es zur Ausbildung einer Flüssigkeitssäule im Staurohr 5.

Aufgrund der Höhendifferenz zwischen Austrittsdüsen 9 und der angestauten Flüssigkeit entsteht ein Energiepotential, welches einen Anstieg der Ausströmgeschwindigkeit der Flüssigkeit in den zu durchströmenden Querschnittsflächen zur Folge hat. Die Energie wird nun aufgrund der Hebelwirkung und der versetzten Anordnung der Austrittsdüsen 9 an den Drehsprengerarmen 8 in Rotationsenergie umgesetzt. Die erforderliche Kraft zur Einleitung der Rotation ($F_{Rot}$) steht hierbei im Gleichgewicht erstens mit der Reibungskraft zwischen dem Auftriebskörper 6 und der Wasseroberfläche, der Kraft $F_{HA}$, zweitens der Reibungskraft zwischen dem Reinigungselement 11 und dem Strahlerschutzrohr 4, der Kraft $F_{HB}$ und drittens der Gewichtskraft ($F_G$) der Vorrichtung.

$$F_{Rot} = F_{HA} + F_{HB} + F_G$$

Die Kraft zur Einleitung der Rotation ($F_{Rot}$) setzt sich aus der Summe der Rückstoßkräfte, welche sich beim Ausströmen der Flüssigkeiten aus den Austrittsdüsen 9 bilden, zusammen.

Durch diesen rein mechanisch, physikalischen Effekt und den gleichzeitigen Anstieg des Füllstands im Bestrahlungsbehälter 1 erfolgt nun ein rotierender Auftrieb der Vorrichtung, bei dem die Oberfläche des Strahlerschutzrohres 4 durch das im Auftriebskörper eingelassenen Reinigungselement 11, welches sich im Reibungskontakt mit dem Strahlerschutzrohr 4 befindet, über die gesamte Auftriebshöhe gereinigt wird.

Die Rotationsgeschwindigkeit der Vorrichtung ist hierbei abhängig von den geometrischen und mechanischen Eigenschaften der Vorrichtung und dem Volumenstrom der zufließenden Flüssigkeit.

geometrische und mechanische Einflußfaktoren der Vorrichtung:

- Querschnittsfläche der Austrittsdüsen
- Querschnittsfläche des Ringspalts zwischen Strahlerschutzrohr und Staurohr
- Höhe des Staurohrs
- Länge der Drehsprengerarme
- Fläche des Auftriebskörpers
- Gewicht der Vorrichtung
- zu durchströmende Fläche des Reinigungselements
- Haftreibung des Reinigungselements bzw. der Reinigungselemente

Dies bedeutet, daß die Rotationsgeschwindigkeit den vorgegebenen Rahmenbedingungen angepaßt werden kann. Ist zum Beispiel durch das Verfahren der zufließende Volumenstrom und die Art des Reinigungselements 11 vorgegeben, kann durch Änderung einer oder mehrerer geometrischer Einflußfaktoren die Rotationsgeschwindigkeit erhöht bzw. reduziert werden kann.

Voraussetzung für die Funktionalität der Reinigungsvorrichtung bei Verwendung eines Auftriebskörpers 4 als Linearantrieb ist eine kontinuierliche oder diskontinuierliche Füllstandsänderung im Bestrahlungsbehälter 1. Obwohl es auch möglich wäre den linearen Antrieb der Reinigungsvorrichtung zum Beispiel mittels eines Linearmotors zu bewerkstelligen, ist der Gebrauch eines Auftriebskörpers 4 nicht nur wegen seiner geringen Störanfälligkeit besonders vorteilhaft, sondern insbesondere dadurch, daß praktisch keine negative Beeinflussung der Strahlungsintensität durch die Reinigungsvorrichtung hervorgerufen wird. Dies liegt darin begründet, daß bei Verwendung eines Auftriebskörpers 4 sich die Reinigungsvorrichtung permanent oberhalb des relevanten Strahlungsbereichs des UV-Strahlers 3 befindet.

Bei einer annähernd kontinuierlichen Füllstandsänderung wie z.B. bei Brauchwasseranlagen zur Mehrfachnutzung von Trinkwasser wird diese Änderung des Füllstands erstens durch die Entnahme der aufbereiteten Flüssigkeit mittels einer Pumpe, welche z.B. dem Ventil 12 nachgeschaltet ist und zweitens durch Zuführen der aufzubereitenden Flüssigkeit über die Zuleitung 2 erzielt. Bei diesem Verfahren muß ferner ein Mindestfüllstand in dem Bestrahlungsbehälter 1 berücksichtigt werden, um einen eventuellen Trockenlauf der Pumpe auszuschließen. Da sich auch in diesem Bereich vorzugsweise ein Bruchteil des Einstrahlbereichs des UV-Strahlers 3 befindet, dieser aber von der Reinigungsvorrichtung aufgrund des Mindestfüllstands nicht erfaßt werden würde, muß die Reinigungsvorrichtung dann zusätzlich im entsprechenden Abstand ein weiteres Reinigungselement z.B. ein dünner Bürstenring mittels eines Gestänges fest an der Vorrichtung installiert werden, um somit auch im Bereich unterhalb des Mindestfüllstands eine Reinigungsleistung zu erzielen.

Bei Verfahren mit höheren Volumenströmen z.B. in der Brautechnik kann die Reinigung auch diskontinuierlich erfolgen. Während der permanenten Bestrahlung ist der Bestrahlungsbehälter 1 komplett gefüllt, d.h. der zufließende Volumenstrom ($Q_{zu}$) ist gleich dem abfließenden Volumenstrom ($Q_{ab}$). Die Reinigungsvorrichtung würde sich in dem Fall oberhalb des Einstrahlbereichs des UV-Strahlers 3 befinden. Soll nun nach einem bestimmten Zeitintervall eine Reinigung des Strahlerschutzrohres 4 erfolgen, müßte der zufließende Volumenstrom ($Q_{zu}$) unterbrochen bzw. reduziert werden ($Q_{zu} < Q_{ab}$), wodurch es zum Absinken sowohl des Flüssigkeitsspiegels im Bestrahlungsbehälter 1 als auch der Reinigungsvorrichtung kommt. Bei Erreichen des unteren Ende des Einstrahlbereichs kann nun das Volumenstromverhältnis so verschoben werden, daß die gewünschte rotierende Auftriebsbewegung erfolgt ($Q_{zu} > Q_{ab}$). Hat sich dann der maximale Füllstand wieder eingestellt, kann dann der zufließende Volumenstrom ($Q_{zu}$) dem abfließenden Volumenstrom ($Q_{ab}$) wieder angeglichen werden ($Q_{zu} = Q_{ab}$).

Verwendet man mehrere dieser Bestrahlungsbehälter 1 in einer Art Kaskadenanordnung mit der entsprechenden Meß-, Steuer- und Regelungstechnik, kann man theoretisch jedweden Volumenstrom effektiv bestrahlen und die Strahlerschutzrohre in den jeweilig verfahrensabhängigen Zeitintervallen, vorzugsweise versetzt, reinigen, so daß es zu keinen relevanten Prozessverzögerungen kommt. Unter dem Aspekt, daß in vielen der Einsatzbereiche von UV-Strahlern die Strahlerschutzrohre noch meistens manuell vom Wartungspersonal gereinigt werden und hierbei die Anlagen außer Betrieb genommen werden muß, lassen sich durch diese Erfindung die Kosten deutlich reduzieren.

**Patentansprüche**

**1.** Vorrichtung zur mechanischen Reinigung von Strahlerschutzrohren, insbesondere von Quarzrohren in UV-Anlagen für die Wasseraufbereitung, umfassend einen längs des Strahlerschutzrohres (4) geführten und entlang desselben bewegbaren Läufer, mindestens ein mechanisches Reinigungselement (11), das an dem Läufer angebracht ist und sich mit seiner Reinigungsfläche im Reibungskontakt befindet; und vorzugsweise einen Linearantrieb zum Hin- und Herbewegen des Läufers längs des Strahlerschutzrohres (4).

2. Vorrichtung nach Anspruch 1, dadurch gekennzeichnet, daß der Linearantrieb von einem Auftriebskörper (6), welcher als Läufer ausgebildet oder mit dem Läufer verbunden ist, und einer Einrichtung zum Ändern des Füllstands einer Flüssigkeit, insbesondere von Wasser, in einem das Strahlerschutzrohr (4) umgebenden Behälter (1), gebildet ist.

3. Vorrichtung nach Anspruch 1 oder 2, dadurch gekennzeichnet, daß der Läufer das Strahlerschutzrohr (4) konzentrisch umgibt.

4. Vorrichtung nach Anspruch 1, 2 oder 3, dadurch gekennzeichnet, daß das Reinigungselement (11) um das Strahlerschutzrohr (4) drehbar angeordnet und mittels eines Drehantriebs angetrieben ist.

5. Vorrichtung nach Anspruch 4, dadurch gekennzeichnet, daß der Drehantrieb ein konzentrisch um das Strahlerschutzrohr (4) angeordnetes Staurohr (5) umfaßt, an dem wenigstens ein Drehsprengerarm (8) mit mindestens einer, vorzugsweise tangentialen, Austrittsdüse (9) versehen ist.

6. Vorrichtung nach Anspruch 5, dadurch gekennzeichnet, daß mehrere Drehsprengerarme (8) mit wenigstens je einer, vorzugsweise tangentialen, Austrittsdüse (9) versehen sind.

7. Vorrichtung nach einem der vorhergehenden Ansprüche, dadurch gekennzeichnet, daß das Reinigungselement (11), vorzugsweise eine Bürste oder mehrere Bürsten, besonders bevorzugt ein Bürstenring oder mehrere Bürstenringe, konzentrisch um das Strahlerschutzrohr (4) angeordnet ist.

8. Vorrichtung nach einem der vorhergehenden Ansprüche, dadurch gekennzeichnet, daß der als Auftriebskörper (6) ausgebildete Läufer, das Reinigungselement (11), das Staurohr (5) und ein Drehsprengerarm oder mehrere Drehsprengerarme (8) mit, vorzugsweise tangentialer, Austrittsdüse bzw., vorzugsweise tangentialen, Austrittsdüsen (9) zu einer baulichen Einheit fest miteinander verbunden sind.

9. Vorrichtung nach einem der Ansprüche 2 bis 8, dadurch gekennzeichnet, daß die Einrichtung zum Ändern des Füllstands eine solche zur kontinuierlichen oder diskontinuierlichen Füllstandsänderung ist, wobei das Ändern des Füllstands, vorzugsweise, derart ist, daß der Füllstand nicht unter einen vorbestimmten Mindestfüllstand absinkt, dadurch gekennzeichnet, daß an dem Läufer oder Reinigungselement (11) ein Zusatzreinigungselement, vorzugsweise ein Bürstenring, mittels eines Gestänges angebracht ist, das bzw. der den Bereich des Mindestfüllstands erfaßt.

10. Vorrichtung nach einem der vorhergehenden Ansprüche, dadurch gekennzeichnet, daß je eine von mehreren Vorrichtungen nach einem der Ansprüche 1 bis 10 in kaskadenartige angeordnete Bestrahlungsbehältern (1) vorgesehen ist.

Fig. 1

## Fig. 2

### Schnitt: A--A